(19) Europäisches Patentamt
European Patent Office
Office européen des brevets

(11) Veröffentlichungsnummer : **0 279 272 B2**

# (12) NEUE EUROPÄISCHE PATENTSCHRIFT

(45) Veröffentlichungstag der neuen Patentschrift : **22.06.94 Patentblatt 94/25**

(51) Int. Cl.$^5$ : **C09B 67/22**, C09B 29/085, D06P 1/18

(21) Anmeldenummer : **88101439.3**

(22) Anmeldetag : **02.02.88**

## (54) Mischungen von Monoazofarbstoffen.

(30) Priorität : **16.02.87 DE 3704809**

(43) Veröffentlichungstag der Anmeldung : **24.08.88 Patentblatt 88/34**

(45) Bekanntmachung des Hinweises auf die Patenterteilung : **04.09.91 Patentblatt 91/36**

(45) Bekanntmachung des Hinweises auf die Entscheidung über den Einspruch : **22.06.94 Patentblatt 94/25**

(84) Benannte Vertragsstaaten : **CH DE FR GB IT LI**

(56) Entgegenhaltungen :
**EP-A- 0 093 935**
**EP-A- 0 147 783**
**DE-A- 3 508 904**
**FR-A- 2 179 264**

(56) Entgegenhaltungen :
**CHEMICAL ABSTRACTS, Band 98, Nr. 16, 1983, Seite 76, Nr. 127682c, Columbus, Ohio, US; & JP-A-57 168 953 (SUMITOMO CHEMICAL CO., LTD) 18-10-1982**
**Bayer Kundeninformation. RESOLIN - K Farbstoffe. Februar 1985**

(73) Patentinhaber : **CASSELLA Aktiengesellschaft**
**Hanauer Landstrasse 526**
**D-60386 Frankfurt (DE)**

(72) Erfinder : **Bühler, Ulrich, Dr.**
**Kastanienweg 8**
**D-8755 Alzenau (DE)**
Erfinder : **Kruse, Hubert**
**Luisenstrasse 33**
**D-6233 Kelkheim (DE)**
Erfinder : **Kühn, Reinhard**
**Heinrich-Bleicher-Strasse 39**
**D-6000 Frankfurt/Main 50 (DE)**
Erfinder : **Boos, Margareta**
**Am See 6**
**D-6234 Hattersheim 3 (DE)**

(74) Vertreter : **Urbach, Hans-Georg, Dr. et al**
**Hanauer Landstrasse 526**
**D-60386 Frankfurt (DE)**

EP 0 279 272 B2

## Beschreibung

Die Erfindung betrifft Mischungen von Monoazofarbstoffen, die dadurch gekennzeichnet sind, daß sie aus einem oder mehreren Farbstoffen der Formel I

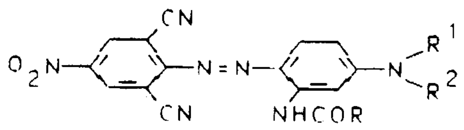

(I)

und einem oder mehreren Farbstoffen der Formel II

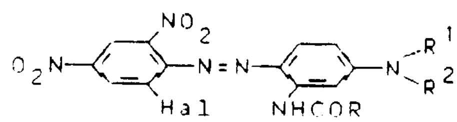

(II)

worin
$R^1$ und $R^2$ unabhängig voneinander lineares oder verzweigtes Alkyl mit 1 bis 6 C-Atomen,
R lineares oder verzweigtes Alkyl mit 1 bis 5 C-Atomen, und Hal Chlor oder Brom bedeuten,
bestehen.

Die Erfindung betrifft auch Verfahren zur Herstellung der erfindungsgemäßen Farbstoffmischungen sowie ihre Verwendung zum Färben und Bedrucken von hydrophoben Fasermaterialien.

Es ist bereits bekannt, daß Gemische aus mindestens zwei verschiedenen Einzelfarbstoffen der Formel I verbesserte färberische Eigenschaften im Vergleich zu den Einzelfarbstoffen besitzen (vergl. DE-AS 22 34 465, EP 93 935 und DE-OS 33 47 572).

Es wurde nun überraschenderweise gefunden, daß die erfindungsgemäßen Mischungen wesentlich verbesserte färberische Eigenschaften gegenüber den Einzelfarbstoffen besitzen.

Bevorzugt sind Farbstoffmischungen, die aus Farbstoffen der Formeln I und II bestehen, wobei $R^1$ und $R^2$ lineares Alkyl mit 2 bis 4 C-Atomen oder R lineares oder verzweigtes Alkyl mit 1 bis 3 C-Atomen bedeuten, und besonders bevorzugt solche, bei denen $R^1$ und $R^2$ lineares Alkyl mit 2 bis 4 C-Atomen und gleichzeitig R lineares oder verzweigtes Alkyl mit 1 bis 3 C-Atomen bedeuten.

Bevorzugt sind auch Farbstoffmischungen, bei denen in den Einzelkomponenten der Formeln I und II die Reste $R^1$ und $R^2$ jeweils gleich und bevorzugt Ethyl oder n-Propyl bedeuten. Bevorzugt sind weiter Farbstoffmischungen, bei denen sich mindestens 1 Einzelkomponente der Formel I und mindestens 1 Einzelkomponente der Formel II, in denen die Reste $R^1$ und $R^2$ jeweils gleich sind, in diesen Resten voneinander unterscheiden. Eine bevorzugte Kombination ist dabei Ethyl/n-Propyl.

Besonders bevorzugt sind Farbstoffmischungen, bei denen sich mindestens 1 Einzelkomponente der Formel I und mindestens 1 Einzelkomponente der Formel II im Rest R unterscheiden. Bevorzugte Kombinationen für R sind dabei Methyl/i-Propyl und Ethyl/i-Propyl, besonders bevorzugte Kombinationen sind Ethyl/n-Propyl und i-Propyl/n-Propyl und eine ganz besonders bevorzugte Kombination ist Methyl/n-Propyl. Ganz besonders bevorzugte Farbstoffmischungen sind auch die genannten besonders oder ganz besonders bevorzugten, in denen darüber hinaus die Reste $R^1$ und $R^2$ der Einzelkomponenten untereinander gleich und Ethyl oder n-Propyl sind.

In den erfindungsgemäßen Farbstoffmischungen kann das Verhältnis der verschiedenen Farbstoffe der allgemeinen Formeln I und II in relativ weiten Grenzen variieren. Im allgemeinen beträgt der Mindestgewichtsanteil einer Komponente 1 % und der maximale Gewichtsanteil 99 %. Bevorzugt ist ein Mindestgewichtsanteil von 5 % und ein maximaler Gewichtsanteil von 95 % und besonders bevorzugt ein Mindestgewichtsanteil von 25 % und ein maximaler Gewichtsanteil von 75 %.

Die bei den erfindungsgemäßen Farbstoffmischungen eingesetzten Einzelfarbstoffe sind bereits bekannt und z.B. in DE 17 94 402, EP 36 512 bzw. FR 810 412 beschrieben.

Die erfindungsgemäßen Farbstoffmischungen können hergestellt werden

a) durch Mischen der separat hergestellten und formierten Einzelkomponenten und vorzugsweise

b) durch gemeinsame Formierung der Einzelkomponenten.

Das Mischen der separat formierten flüssigen oder pulverförmigen Einzelkomponenten kann in geeigneten Mischern oder Rührwerken erfolgen. Es ist jedoch auch eine "Naßmischung" möglich, bei der die Einzelkomponenten in die Färbeflotte eingerührt werden.

Das gemeinsame Formieren der Einzelkomponenten erfolgt dergestalt, daß die Einzelkomponenten in Gegenwart eines oder mehrerer Dispergiermittel oder eines oder mehrerer Emulgatoren in geeigneten Mühlen wie z.B. Kugel-oder Sandmühlen gemeinsam gemahlen werden. Soll eine pulverförmige Dispersion hergestellt werden, muß sich dem Mahlvorgang noch eine Sprühtrocknung anschließen. Der Mahlprozeß wird bei 0 bis 100°C, zweckmäßigerweise bei ca. 20 bis ca. 70°C, durchgeführt. In vielen Fällen kann es vorteilhaft sein, dem Mahlprozeß noch einen Stabilisierungsschritt vorzuschalten, bei dem die Einzelkomponenten gemeinsam in Wasser in Gegenwart eines oder mehrerer Dispergiermittel oder Emulgatoren auf Temperaturen von 50 bis 150°C erhitzt werden, wobei das Erhitzen auf Temperaturen über 100°C in geschlossenen Gefäßen erfolgen muß. Nach Zugabe der für das Mahlen zusätzlich benötigten Dispergiermittel oder Emulgatoren kann die so behandelte Farbstoffmischung anschließend sofort gemahlen werden.

Anstelle der Dispergiermittel oder Emulgatoren kann bei diesem Stabilisierungsschritt auch ein in Wasser lösliches organisches Lösungsmittel wie z.B. Ethanol, Aceton oder Dimethylsulfoxid, vorzugsweise jedoch ein in Wasser wenig lösliches organisches Lösungsmittel wie z.B. n-Butanol, Toluol oder Chlorbenzol eingesetzt werden. Bei den in Wasser wenig löslichen organischen Lösungsmitteln ist mitunter schon ein Gehalt von 1 bis 10 % Lösungsmittel in der flüssigen Phase ausreichend. Bei den in Wasser löslichen organischen Lösungsmitteln sollte der Gehalt zweckmäßigerweise zwischen 5 und 50 % liegen. Die erforderlichen Stabilisierungszeiten liegen zwischen ½ Stunde und ca. 3 Stunden. Vor dem Mahlvorgang müssen diese organischen Lösungsmittel durch Destillation oder Wasserdampfdestillation abgetrennt werden. Eine Stabilisierung ist auch dergestalt möglich, daß die Einzelkomponenten in einem organischen Lösungsmittel gelöst und zur gemeinsamen Kristallisation gebracht oder aber z.B. mit Wasser ausgefällt werden. Auch hier muß die entstandene Farbstoffmischung, hier zweckmäßigerweise durch Filtration und anschließendes Waschen mit Wasser, vom organischen Lösungsmittel befreit werden.

Für den oben angegebenen Mahlvorgang bzw. den Stabilisierungsschritt sind geeignete Dispergiermittel z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren, Alkyl- oder Alkylarylsulfonate sowie Alkyl-aryl-polyglykol-ether-sulfate. Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäure-amiden, wie z.B. Anlagerungsprodukte von 5 bis 10 Ethylenoxid-Einheiten an $C_8$-$C_{10}$-Alkylphenole.

Die Farbstoffmischungen werden im allgemeinen auf einen Farbstoffgehalt bis zu 50 Gewichtsprozent und einen Dispergiermittelgehalt bis zu etwa 10 % eingestellt. Aus ökonomischen Gründen werden Farbstoffgehalte von 15 Gewichtsprozent meist nicht unterschritten.

Die erfindungsgemäßen Farbstoffmischungen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenol-phenolat und Natrium-penta-chlorphenolat. Als Pulver formierte Farbstoffmischungen enthalten darüber hinaus noch andere Hilfsmittel wie z.B. Netz- oder Entstaubungsmittel.

Die erfindungsgemäßen Farbstoffmischungen sind als solche vorzüglich zum Färben und Bedrucken von hydrophoben synthetischen Fasermaterialien geeignet. Überraschenderweise sind sie den Einzelfarbstoffen im Hinblick auf färberisches Verhalten und coloristische Echtheiten, wie z.B. Egalisiervermögen, Thermomigration, Thermofixierechtheit, Wasser-, Wasch- und Reibechtheit, insbesondere im Aufbau-und Ausziehvermögen und der Temperaturempfindlichkeit, überlegen. Außerdem werden bei den erfindungsgemäßen Farbstoffmischungen auch bei einer Herabsetzung der Färbetemperaturen noch hervorragend farbstarke Färbungen bei ausgezeichneter Baderschöpfung erhalten.

Als hydrophobe synthetische Materialien kommen z.B. in Betracht: Cellulose-2½-acetat, Cellulosetriacetat, Polyamide und besonders hochmolekulare Polyester, wie z.B. Polyethylenglykolterephthalat und deren Mischungen mit natürlichen Faserstoffen, wie z.B. Baumwolle, regenerierte Cellulosefasern oder Wolle.

Vorzugsweise werden die erfindungsgemäßen Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Cellulosetriacetat eingesetzt. Diese Materialien können in Form von flächen- oder fadenförmigen Gebilden vorliegen und z.B. zu Garnen oder gewebten oder gestrickten Textilstoffen verarbeitet sein. Das Färben des genannten Fasergutes mit

den erfindungsgemäßen Farbstoffmischungen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermosolverfahren, wobei die Ware mit der Färbeflotte geklotzt und anschließend bei etwa 180 bis 230°C fixiert wird. Das Bedrucken der genannten Materialien kann so durchgeführt werden, daß die mit erfindungsgemäße Farbstoffmischungen enthaltenden Druckpasten bedruckte Ware zur Fixierung des Farbstoffs, gegebenenfalls in Gegenwart eines Carriers, bei Temperaturen zwischen 110 bis 230°C mit HT-Dampf, Druckdampf oder Trockenhitze behandelt wird.

Die erfindungsgemäßen Farbstoffmischungen können auch zum Färben der vorstehend aufgeführten hydrophoben Materialien aus organischen Lösungsmitteln nach den hierbei bekannten Methoden und zum Färben in der Masse verwendet werden.

Zur Herstellung der Färbeflotten werden die erforderlichen Mengen der Farbstoffmischungen, die gemäß den obigen Angaben hergestellt wurden, mit dem Färbemedium, vorzugsweise mit Wasser, so weit verdünnt, daß sich für die Färbung ein Flottenverhältnis von 1: 5 bis 1: 50 ergibt.

Die Erfindung wird durch folgende Beispiele näher erläutert:

Beispiel 1:

22,5 g des Farbstoffs der Formel III

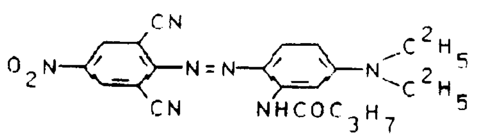

(III)

und 7,5 g des Farbstoffs der Formel IV

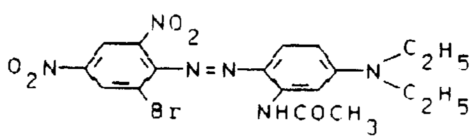

(IV)

werden in 250 ml Wasser mit 87,2 g Natriumligninsulfonat und 12,6 g eines nichtionischen Dispergiermittels auf Basis Arytlpolyglykolether mit 50%iger Essigsäure auf einen pH-Wert von 8 gestellt, in einer Sandmühle bis zur Feinverteilung gemahlen (80 % ≦ 1 µ), gesiebt und im Sprühtrockner gesprüht. 2 g des so erhaltenen Farbstoffs werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt ¾ Stunden bei 120°C. Nach anschließendem Spülen, reduktiver Nachbehandlung mit einer 0,2%igen Natriumdithionitlösung während 15 Minuten bei 70 bis 80°C, Spülen und Trocknen erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalat ein und färbt 1 Stunde bei 135°C und behandelt den Nachzug, wie vorstehend bei der eigentlichen Färbung angegeben, nach, so erhält man eine nahezu farblose Färbung.

Beispiel 2 :

Je 15,8 g des Farbstoffs der Formel III und des Farbstoffs der Formel V

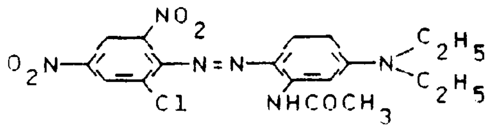

(V)

werden in 250 ml Wasser gemeinsam mit 43,6 g Ligninsulfonat und 12,6 g eines nichtionischen Dispergiermittels auf Basis Arylpolyglykolether mit 50%iger Essigsäure auf einen pH-Wert von 5,9 gestellt und mit dem Zackenrührer homogenisiert. Dann wird die erhaltene Dispersion im Autoklaven innerhalb von 3 Stunden auf 120°C erwärmt und 2 Stunden bei dieser Temperatur gerührt. Nach dem Abkühlen werden 43,6 g eines Kondensationsproduktes aus Kresol, Formaldehyd und Naphthol-2-sulfonsäure-natrium-salz zugesetzt und die Dispersion mit 50%iger Essigsäure auf pH 8,0 gestellt. Anschließend wird 2 Stunden bei Raumtemperatur in der Perlmühle bis zur Feinverteilung (80 % $\leqq$ 1 μ) gemahlen, gesiebt und im Sprühtrockner gesprüht.

Wird der so hergestellte Farbstoff den Angaben in Beispiel 1 gemäß gefärbt, so zeigt sich in den erhaltenen Färbungen das hervorragende Aufbau- und Ausziehverhalten dieses erfindungsgemäßen Farbstoffs.

Beispiel 3:

Je 10 g des Farbstoffs der Formeln III, IV und VI

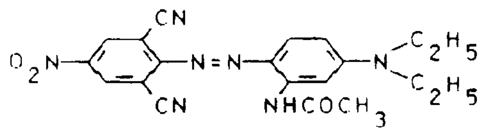

(VI)

werden in 300 ml DMSO bei 110°C gelöst, auf 1,5 l Wasser gefällt, abfiltriert und bei 50°C im Vakuum getrocknet. 10 g der so erhaltenen Farbstoffmischung werden in einer Sandmühle gemeinsam mit 10 g eines Kondensationsproduktes aus Naphthalinsulfonsäure und Formaldehyd und 80 g Wasser aufgemahlen. Färbt man mit 4,5 g dieses formierten Farbstoffs analog den Angaben des Beispiels 1, so erhält man ebenfalls farbstarke blaue Färbungen mit hervorragenden Echtheiten.

In der nachstehenden Tabelle sind weitere erfindungsgemäße Farbstoffmischungen mit den Bedeutungen R, $R^1$, $R^2$ und Hal und dem Gewichtsverhältnis der Einzelfarbstoffe der Formeln I und II angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

| Beispiel | allgemeine Formel | $R^1$ | $R^2$ | R | Hal | Gewichtsverhältnis |
|---|---|---|---|---|---|---|
| 4 | I | $C_2H_5$ | $C_2H_5$ | $n\text{-}C_3H_7$ | - | 40 |
| | I | $C_2H_5$ | $C_2H_5$ | $CH_3$ | - | 20 |
| | II | $C_2H_5$ | $C_2H_5$ | $CH_3$ | Cl | 40 |
| 5 | I | $C_2H_5$ | $C_2H_5$ | $CH_3$ | - | 50 |
| | II | $C_2H_5$ | $C_2H_5$ | $CH_3$ | Cl | 50 |
| 6 | I | $C_2H_5$ | $C_2H_5$ | $CH_3$ | - | 75 |
| | II | $C_2H_5$ | $C_2H_5$ | $CH_3$ | Br | 25 |
| 7 | I | $C_2H_5$ | $C_2H_5$ | $CH_3$ | - | 30 |
| | I | $n\text{-}C_3H_7$ | $n\text{-}C_3H_7$ | $CH_3$ | - | 30 |
| | II | $C_2H_5$ | $C_2H_5$ | $CH_3$ | Br | 40 |
| 8 | I | $C_2H_5$ | $C_2H_5$ | $CH_3$ | - | 35 |
| | I | $n\text{-}C_3H_7$ | $n\text{-}C_3H_7$ | $CH_3$ | - | 35 |
| | II | $C_2H_5$ | $C_2H_5$ | $CH_3$ | Cl | 30 |

| Beispiel | allgemeine Formel | $R^1$ | $R^2$ | R | Hal | Gewichtsverhältnis |
|---|---|---|---|---|---|---|
| 9 | I | $n-C_3H_7$ | $n-C_3H_7$ | $CH_3$ | - | 60 |
| | II | $C_2H_5$ | $C_2H_5$ | $CH_3$ | Br | 40 |
| 10 | I | $n-C_3H_7$ | $n-C_3H_7$ | $CH_3$ | - | 35 |
| | II | $C_2H_5$ | $C_2H_5$ | $CH_3$ | Cl | 65 |
| 11 | I | $C_2H_5$ | $C_2H_5$ | $n-C_3H_7$ | - | 40 |
| | I | $n-C_3H_7$ | $n-C_3H_7$ | $CH_3$ | - | 30 |
| | II | $C_2H_5$ | $C_2H_5$ | $CH_3$ | Br | 30 |
| 12 | I | $C_2H_5$ | $C_2H_5$ | $n-C_3H_7$ | - | 45 |
| | I | $n-C_3H_7$ | $n-C_3H_7$ | $CH_3$ | - | 35 |
| | II | $C_2H_5$ | $C_2H_5$ | $CH_3$ | Cl | 20 |
| 13 | I | $C_2H_5$ | $C_2H_5$ | $CH_3$ | - | 50 |
| | II | $C_2H_5$ | $C_2H_5$ | $CH_3$ | Br | 25 |
| | II | $C_2H_5$ | $C_2H_5$ | $CH_3$ | Cl | 25 |
| 14 | I | $C_2H_5$ | $C_2H_5$ | $n-C_3H_7$ | - | 30 |
| | II | $C_2H_5$ | $C_2H_5$ | $CH_3$ | Br | 35 |
| | II | $C_2H_5$ | $C_2H_5$ | $CH_3$ | Cl | 35 |

| Beispiel | allgemeine Formel | $R^1$ | $R^2$ | R | Hal | Gewichtsverhältnis |
|---|---|---|---|---|---|---|
| 15 | I | $n-C_3H_7$ | $n-C_3H_7$ | $CH_3$ | - | 80 |
| | II | $C_2H_5$ | $C_2H_5$ | $CH_3$ | Br | 10 |
| | II | $C_2H_5$ | $C_2H_5$ | $CH_3$ | Cl | 10 |
| 16 | I | $C_2H_5$ | $C_2H_5$ | $C_2H_5$ | - | 45 |
| | II | $C_2H_5$ | $C_2H_5$ | $CH_3$ | Br | 55 |
| 17 | I | $C_2H_5$ | $C_2H_5$ | $i-C_3H_7$ | - | 55 |
| | II | $C_2H_5$ | $C_2H_5$ | $CH_3$ | Cl | 45 |
| 18 | I | $C_2H_5$ | $C_2H_5$ | $n-C_4H_9$ | - | 10 |
| | II | $C_2H_5$ | $C_2H_5$ | $C_2H_5$ | Br | 90 |
| 19 | I | $C_2H_5$ | $C_2H_5$ | $n-C_5H_{11}$ | - | 60 |
| | II | $C_2H_5$ | $C_2H_5$ | $CH_3$ | Cl | 40 |
| 20 | I | $C_2H_5$ | $C_2H_5$ | $CH_3$ | - | 30 |
| | I | $C_2H_5$ | $C_2H_5$ | $C_2H_5$ | - | 30 |
| | II | $C_2H_5$ | $C_2H_5$ | $CH_3$ | Br | 40 |
| 21 | I | $C_2H_5$ | $C_2H_5$ | $CH_3$ | - | $33^1/3$ |
| | I | $C_2H_5$ | $C_2H_5$ | $i-C_3H_7$ | - | $33^1/3$ |
| | II | $C_2H_5$ | $C_2H_5$ | $CH_3$ | Br | $33^1/3$ |

| Beispiel | allgemeine Formel | $R^1$ | $R^2$ | R | Hal | Gewichtsverhältnis |
|---|---|---|---|---|---|---|
| 22 | I | $C_2H_5$ | $C_2H_5$ | $C_2H_5$ | - | 40 |
| | I | $C_2H_5$ | $C_2H_5$ | $n-C_3H_7$ | - | 40 |
| | II | $C_2H_5$ | $C_2H_5$ | $CH_3$ | Br | 20 |
| 23 | I | $C_2H_5$ | $C_2H_5$ | $C_2H_5$ | - | 20 |
| | I | $C_2H_5$ | $C_2H_5$ | $i-C_3H_7$ | - | 40 |
| | II | $C_2H_5$ | $C_2H_5$ | $CH_3$ | Cl | 40 |
| 24 | I | $C_2H_5$ | $C_2H_5$ | $i-C_3H_7$ | - | 10 |
| | I | $C_2H_5$ | $C_2H_5$ | $n-C_3H_7$ | - | 60 |
| | II | $C_2H_5$ | $C_2H_5$ | $CH_3$ | Br | 30 |
| 25 | I | $CH_3$ | $CH_3$ | $n-C_3H_7$ | - | 75 |
| | II | $C_2H_5$ | $C_2H_5$ | $CH_3$ | Cl | 25 |
| 26 | I | $n-C_4H_9$ | $n-C_4H_9$ | $CH_3$ | - | 25 |
| | II | $C_2H_5$ | $C_2H_5$ | $CH_3$ | Br | 75 |
| 27 | I | $n-C_5H_9$ | $n-C_5H_9$ | $CH_3$ | - | 80 |
| | II | $C_2H_5$ | $C_2H_5$ | $CH_3$ | Cl | 20 |
| 28 | I | $n-C_3H_7$ | $n-C_3H_7$ | $C_2H_5$ | - | 60 |
| | II | $C_2H_5$ | $C_2H_5$ | $CH_3$ | Br | 40 |

| Beispiel | allgemeine Formel | $R^1$ | $R^2$ | R | Hal | Gewichtsverhältnis |
|---|---|---|---|---|---|---|
| 29 | I | $C_2H_5$ | $C_2H_5$ | $C_2H_5$ | - | 15 |
| | I | $n-C_3H_7$ | $n-C_3H_7$ | $CH_3$ | - | 15 |
| | II | $C_2H_5$ | $C_2H_5$ | $CH_3$ | Br | 70 |
| 30 | I | $n-C_4H_9$ | $n-C_4H_9$ | $CH_3$ | - | 5 |
| | I | $n-C_3H_7$ | $n\ C_3H_7$ | $n-C_3H_7$ | - | 30 |
| | II | $C_2H_5$ | $C_2H_5$ | $CH_3$ | Cl | 65 |
| 31 | I | $C_2H_5$ | $C_2H_5$ | $CH_3$ | - | 25 |
| | I | $C_2H_5$ | $C_2H_5$ | $n-C_3H_7$ | - | 25 |
| | I | $C_3H_7$ | $C_3H_7$ | $CH_3$ | - | 25 |
| | II | $C_2H_5$ | $C_2H_5$ | $CH_3$ | Br | 25 |
| 32 | I | $C_2H_5$ | $C_2H_5$ | $CH_3$ | - | 34 |
| | I | $C_2H_5$ | $C_2H_5$ | $n-C_3H_7$ | - | 50 |
| | II | $C_2H_5$ | $C_2H_5$ | $CH_3$ | Cl | 8 |
| | II | $C_2H_5$ | $C_2H_5$ | $CH_3$ | Br | 8 |
| 33 | I | $C_2H_5$ | $C_2H_5$ | $CH_3$ | - | 50 |
| | II | $C_2H_5$ | $C_2H_5$ | $n-C_3H_7$ | Br | 50 |

| Beispiel | allgemeine Formel | $R^1$ | $R^2$ | R | Hal | Gewichtsverhältnis |
|---|---|---|---|---|---|---|
| 34 | I | $C_2H_5$ | $C_2H_5$ | $CH_3$ | - | 35 |
| | II | $C_2H_5$ | $C_2H_5$ | $C_2H_5$ | Cl | 65 |
| 35 | I | $C_2H_5$ | $C_2H_5$ | $CH_3$ | - | 65 |
| | II | $C_2H_5$ | $C_2H_5$ | $n-C_3H_7$ | Cl | 35 |
| 36 | I | $C_2H_5$ | $C_2H_5$ | $CH_3$ | - | 80 |
| | II | $n-C_3H_7$ | $n-C_3H_7$ | $CH_3$ | Br | 20 |
| 37 | I | $C_2H_5$ | $C_2H_5$ | $n-C_3H_7$ | - | 60 |
| | II | $n-C_3H_7$ | $n-C_3H_7$ | $CH_3$ | Cl | 40 |
| 38 | I | $n-C_3H_7$ | $n-C_3H_7$ | $CH_3$ | - | 40 |
| | II | $C_2H_5$ | $C_2H_5$ | $n-C_3H_7$ | Br | 60 |
| 39 | I | $C_2H_5$ | $C_2H_5$ | $n-C_3H_7$ | - | 93 |
| | II | $n-C_4H_9$ | $n-C_4H_9$ | $CH_3$ | Cl | 7 |
| 40 | I | $C_2H_5$ | $C_2H_5$ | $C_2H_5$ | - | 55 |
| | II | $n-C_6H_{13}$ | $n-C_6H_{13}$ | $CH_3$ | Br | 45 |
| 41 | I | $C_2H_5$ | $C_2H_5$ | $CH_3$ | - | 65 |
| | II | $CH_3$ | $CH_3$ | $i-C_3H_7$ | Cl | 35 |

| Beispiel | allgemeine Formel | $R^1$ | $R^2$ | R | Hal | Gewichtsverhältnis |
|---|---|---|---|---|---|---|
| 42 | I | $C_2H_5$ | $C_2H_5$ | $n-C_3H_7$ | - | 20 |
| | I | $C_2H_5$ | $C_2H_5$ | $i-C_3H_7$ | - | 20 |
| | II | $n-C_3H_7$ | $n-C_3H_7$ | $CH_3$ | Br | 60 |
| 43 | I | $C_2H_5$ | $n-C_3H_7$ | $CH_3$ | - | 50 |
| | II | $C_2H_5$ | $C_2H_5$ | $CH_3$ | Cl | 50 |
| 44 | I | $C_2H_5$ | $i-C_3H_7$ | $C_2H_5$ | - | 65 |
| | II | $C_2H_5$ | $C_2H_5$ | $CH_3$ | Br | 35 |
| 45 | I | $C_2H_5$ | $n-C_4H_9$ | $CH_3$ | - | 80 |
| | II | $C_2H_5$ | $n-C_4H_9$ | $C_2H_5$ | Br | 20 |
| 46 | I | $C_2H_5$ | $C_2H_5$ | $C_2H_5$ | - | 50 |
| | II | $CH_3$ | $n-C_4H_9$ | $CH_3$ | Cl | 50 |
| 47 | I | $CH_3$ | $i-C_4H_9$ | $CH_3$ | - | 20 |
| | II | $C_2H_5$ | $C_2H_5$ | $i-C_3H_7$ | Cl | 80 |

## Patentansprüche

1. Mischungen von Monoazofarbstoffen, dadurch gekennzeichnet, daß sie aus einem oder mehreren Farbstoffen der Formel 1

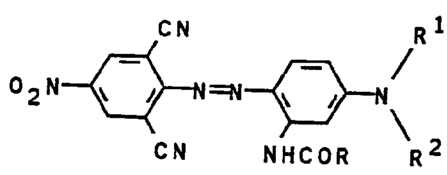

(I)

und einem oder mehreren Farbstoffen der Formel II

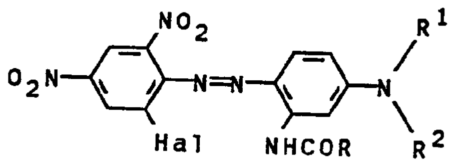

(II)

worin $R^1$ und $R^2$ unabhängig voneinander lineares oder verzweigtes Alkyl mit 1 bis 6 C-Atomen, R lineares oder verzweigtes Alkyl mit 1 bis 5 C-Atomen und Hal Chlor oder Brom bedeuten, bestehen.

2. Farbstoffmischung nach Anspruch 1, dadurch gekennzeichnet, daß der Gewichtsanteil eines Farbstoffs der Formeln I bzw. II 1 bis 99 %, bevorzugt 5 bis 95 % und ganz besonders bevorzugt 25 bis 75 % beträgt.

3. Farbstoffmischung nach Anspruch 1 oder 2, dadurch gekennzeichnet, daß $R^1$ und $R^2$ lineares Alkyl mit 2 bis 4 C-Atomen oder, bevorzugt und, R lineares oder verzweigtes Alkyl mit 1 bis 3 C-Atomen bedeuten.

4. Farbstoffmischung nach einem oder mehreren der Ansprüche 1 bis 3, dadurch gekennzeichnet, daß in den Einzelkomponenten der Formeln I und II die Reste $R^1$ und $R^2$ jeweils gleich sind und bevorzugt Ethyl oder n-Propyl bedeuten.

5. Farbstoffmischung nach einem oder mehreren der Ansprüche 1 bis 4, dadurch gekennzeichnet, daß sich mindestens 1 Einzelkomponente der Formel I und mindestens 1 Einzelkomponente der Formel II, in denen die Reste $R^1$ und $R^2$ jeweils gleich sind, in diesen Resten voneinander unterscheiden.

6. Farbstoffmischung nach einem oder mehreren der Ansprüche 1 bis 5, dadurch gekennzeichnet, daß sich mindestens 1 Einzelkomponente der Formel I und mindestens 1 Einzelkomponente der Formel II im Rest R unterscheiden, bevorzugt, wenn zusätzlich die Reste $R^1$ und $R^2$ der Einzelkomponenten jeweils gleich sind.

7. Verfahren zur Herstellung der in einem oder mehreren der Ansprüche 1 bis 6 genannten Farbstoffmischungen, dadurch gekennzeichnet, daß Einzelfarbstoffe der Formeln I und II gemischt werden.

8. Verfahren zur Herstellung der in einem oder mehreren der Ansprüche 1 bis 6 genannten Farbstoffmischungen, dadurch gekennzeichnet, daß eine Mischung aus Einzelfarbstoffen der Formeln I und II umkristallisiert oder gelöst und gefällt oder in Wasser bei Temperaturen von 50 bis 150°C in Gegenwart eines oder mehrerer Dispergiermittel oder eines organischen Lösungsmittels erhitzt wird und gegebenenfalls in eine Farbstoffzubereitung überführt wird.

9. Verfahren zum Färben und Bedrucken von hydrophoben Fasermaterialien und deren Mischungen mit natürlichen Faserstoffen, dadurch gekennzeichnet, daß eine Farbstoffmischung nach einem oder meheren der Ansprüche 1 bis 6 verwendet wird.

## Claims

1. Mixtures of monoazo dyestuffs, characterized in that they consist of one or more dyestuffs of the formula I

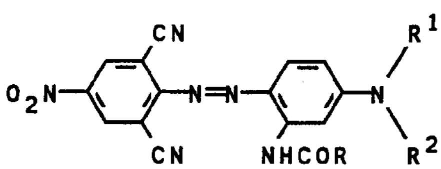

(I)

and one or more dyestuffs of the formula II

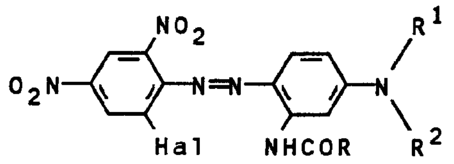

(II)

wherein $R^1$ and $R^2$ independently of one another denote linear of branched alkyl with 1 to 6 C atoms, R denotes linear or branched alkyl with 1 to 5 C atoms and Hal denotes chlorine or bromine.

2. Dyestuff mixture according to Claim 1, characterized in that the weight content of a dyestuff of the formulae I and II is 1 to 99%, preferably 5 to 95% and especially preferably 25 to 75%.

3. Dyestuff mixture according to Claim 1 or 2, characterized in that $R^1$ and $R^2$ denote linear alkyl with 2 to 4 C atoms or, preferably and, R denotes linear or branched alkyl with 1 to 3 C atoms.

4. Dyestuff mixture according to one or more of Claims 1 to 3, charcterized in that the radicals $R^1$ and $R^2$ in the individual components of the formulae I and II are in each case identical and preferably denote ethyl or n-propyl.

5. Dyestuff mixture according to one or more of Claims 1 to 4, characterized in that at least 1 individual component of the formula I and at least 1 individual component of the formula II in which the radicals $R^1$ and $R^2$ are in each case identical differ from one another in these radicals.

6. Dyestuff mixture according to one or more of Claims 1 to 5, characterized in that at least 1 individual component of the formula I and at least 1 individual component of the formula II differ in the radical R, and preferably if additionally the radicals $R^1$ and $R^2$ of the individual components are in each case identical.

7. Process for the preparation of the dyestuff mixtures mentioned in one or more of Claims 1 to 6, characterized in that individual dyestuffs of the formulae I and II are mixed.

8. Process for the preparation of the dyestuff mixtures mentioned in one or more of Claims 1 to 6, characterized in that a mixture of individual dyestuffs of the formulae I and II is recrystallized or dissolved and precipitated or heated in water at temperatures of 50 to 150°C in the presence of one or more dispersing agents or an organic solvent, and if appropriate is converted into a dyestuff formulation.

9. Process for dyeing and printing hydrophobic fibre materials and mixtures thereof with natural fibre materials, characterized in that a dyestuff mixture according to one or more of Claims 1 to 6 is used.

## Revendications

1. Mélanges de colorants mono-azoiques, mélanges caractérisés en ce qu'ils sont constitutés d'un ou plusieurs colorants de formule I:

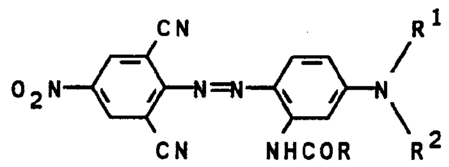

(I)

et un ou plusieurs colorants de formule II:

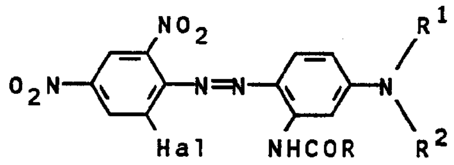

(II)

formules dans lesquelles:
$R^1$ et $R^2$ représentent chacun, indépendamment l'un de l'autre, un radical alkyle, linéaire ou ramifié, qui contient de 1 à 6 atomes de carbone, R représente un radical alkyle, linéaire ou ramifié, qui contient de 1 à 5 atomes de carbone, et Hal représente le chlore ou le brome.

2. Mélange de colorants selon la revendication 1, caractérisé en ce que la proportion pondérale d'un colorant de formule I ou II est comprise entre 1 et 99 %, de préférence entre 5 et 95 % ou, mieux encore, entre 25 et 75 %.

3. Mélange de colorants selon l'une des revendications 1 et 2, caractérisé en ce que $R^1$ et $R^2$ représentent chacun un radical alkyle linéaire contenant de 2 à 4 atomes de carbone ou, de préférence "et", R représente un radical alkyle, linéaire ou ramifié, qui contient de 1 à 3 atomes de carbone.

4. Mélange de colorants selon l'une quelconque des revendications 1 à 3, caractérisé en ce que, dans chacune des composantes individuelles de formules I et II, les radicaux $R^1$ et $R^2$ sont identiques l'un à l'autre et représentent de préférence chacun un radical éthyle ou n-propyle.

5. Mélange de colorants selon l'une quelconque des revendications 1 à 4, caractérisé en ce qu'au moins une composante individuelle de formule I et au moins une composante individuelle de formule II dans lesquelles $R^1$ et $R^2$ sont à chaque fois identiques, diffèrent l'une de l'autre par ces radicaux.

6. Mélange de colorants selon l'une quelconque des revendications 1 à 5, caractérisé en ce qu'au moins une composante individuelle de formule I et au moins une composante individuelle de formule II diffèrent par le radical R, surtout lorsque, en plus, les radicaux $R^1$ et $R^2$ de chacune des composantes individuelles sont identiques.

7. Procédé pour préparer les mélanges de colorants mentionnés dans une ou plusieurs des revendications 1 à 6, procédé caractérisé en ce qu'on mélange des colorants individuels de formules I et II.

8. Procédé pour préparer les mélanges de colorants mentionnés dans une ou plusieurs des revendications 1 à 6, procédé caractérisé en ce qu'on recristallise un mélange de colorants individuels de formules I et II, ou on dissout et fait précipiter un tel mélange, ou on chauffe un tel mélange dans de l'eau à des températures de 50 à 150°C en présence d'un ou de plusieurs dispersants ou d'un solvant organique, et on le met éventuellement sous la forme d'une composition de colorants.

9. Procédé pour teindre et imprimer des matières fibreuses hydrophobes et leurs mélanges avec des matières fibreuses naturelles, procédé caractérisé en ce qu'on utilise un mélange de colorants selon une ou plusieurs des revendications 1 à 6.